# EUROPEAN PATENT APPLICATION

(11) **EP 1 107 600 A1**
(43) Date of publication of application: **13.06.2001**
(21) Application number: 00310837.0
(22) Date of filing: 06.12.2000
(51) Int. Cl.: H04N 7/24

(54) **Method and system for optimising a data carousel**

(30) Priority: 07.12.1999 GB 9928964
(71) Applicant: Sony Service Center (Europe) N.V., 1840 Londerzeel (BE)
(72) Inventor: Skaringer, lars, 1130 Brussels (BE); Thiry, Olivier, 1130 Brussels (BE)
(74) Representative: Ayers, Martyn Lewis Stanley

(57) **Abstract**

A method and system for optimising the time required to download objects from an Object Carousel used in a DVB system is provided. The method comprises ensuring that all the directory object representations are located in a subset of modules on the Data Carousel. This means that after one file object has been downloaded, most, if not all of the directory information of the virtual file system will have been resolved so that only a single module needs to be downloaded to access any further file objects.

## Description

The present invention relates generally to the protocol framework known as DSM-CC (Digital Storage Media - Control and Command) which allows the broadcasting of data to receivers.

More specifically, the present invention relates to a way of constructing an Object Carousel so as to optimise the download times while a receiver is navigating a "virtual file system".

A full description of the DSM-CC specification may be found in ISO/IEC 13818-6. It enables a broadcaster to broadcast a "virtual file system" on top of MPEG-2 private sections. Receivers can then navigate and retrieve data from this virtual file system. The specification provides protocols for downloading software components from servers to clients. In particular, the DSM-CC system is applicable to DVB (Digital Video Broadcasting) systems which provide interactive multi-media applications such as video on demand (VOD), near video on demand (NVOD), home shopping, news on demand and electronic program guides (EPG).

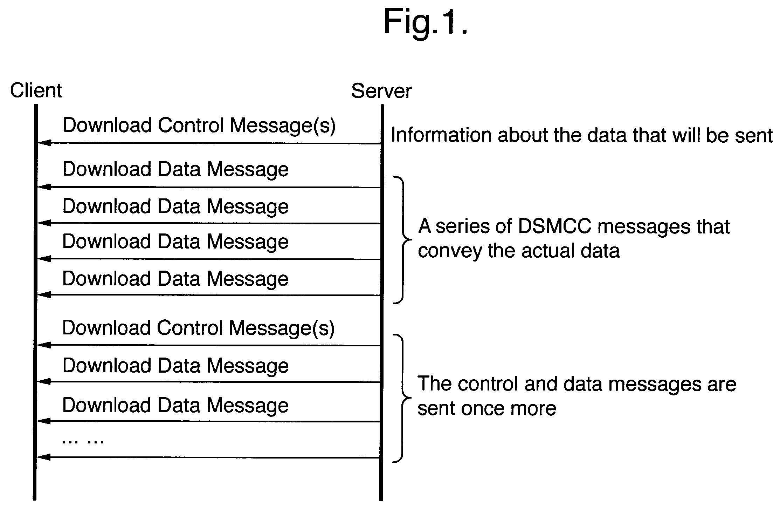

Two philosophies for downloading the data needed to implement these applications can be identified. The first, bidirectional downloading, occurs when the client sets up download control parameters with the server and then requests the software module to be downloaded. The actual data is then conveyed from the server to the client as a series of messages. This philosophy requires two-way communication so that the client can request particular software modules. The second philosophy, unidirectional downloading, is applicable to systems in which only one-way communication is available (for example in digital video broadcasting). In the case of such broadcasting, there is not necessarily any mechanism for the client to send messages to the server. However, it is still possible to download data from the server to clients by repeatedly sending download control messages followed by download data messages over the broadcast channel. These control and data messages are cyclically transmitted over time and the client can choose whether to ignore them or receive and process them. The client has no control over when the various messages are sent. This system of the broadcast of cyclically repeating various modules is called a Data Carousel system. Figure 1 of the accompanying drawings shows schematically an example of unidirectional downloading. As can be seen, the server repeatedly transmits download control messages and download data messages. The download control messages give information that the client requires in order to download the data messages. The data messages contain the actual data to be downloaded. This action of the server transmitting control and data messages is repeated indefinitely. When a client wants to download a particular data message, it must wait for the server to transmit it before it can download it. The maximum length of time the client has to wait can be determined by the time it takes for a complete cycle of the Carousel, which in turn can be deduced from the size of the Carousel and the rate at which data can be broadcast.

The Data Carousel can therefore be seen to be a transport mechanism that allows a server to present a set of distinct data modules to a decoder at the client by cyclically repeating the contents of the Carousel, one or more times. A well known example of the Data Carousel concept is the Teletext system in which a complete set of teletext pages is cyclically broadcast in some lines of an analogue video signal that are not part of the active picture. When users request a page, they must usually wait for the next time the page is broadcast.

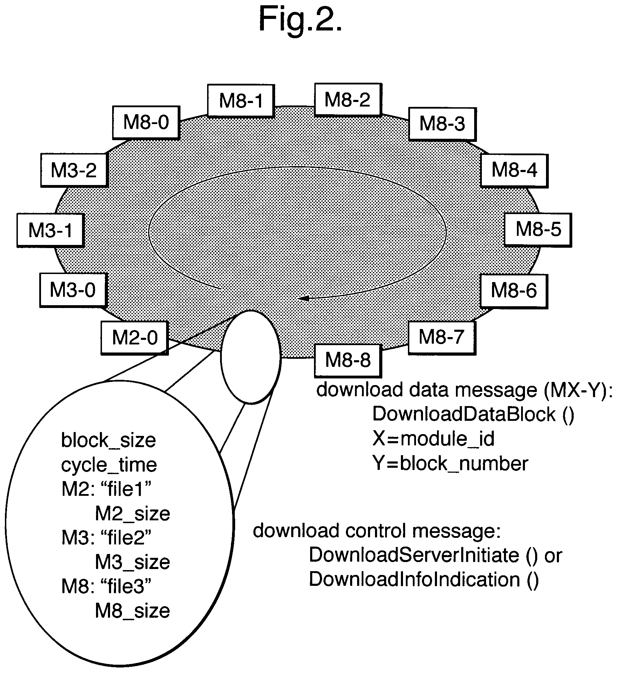

Within a Data Carousel, the data is structured into modules, as shown in Figure 2 of the accompanying drawings. In Figure 2, three modules are shown - M2, M3 and M8. In this example, each module contains the contents of a file. M2 relates to "file1", M3 relates to "file2" and M8 relates to "file3". Each module is divided up to form a payload of one or more download data messages each defined using the DSM-CC DownloadDataBlock syntax. The number of such download data messages depends on the size of the module and the maximum payload of each download data message. Information describing each module and any logical grouping is provided by download control messages, defined using either the DSM-CC DownloadServerInitiate or Downloadlnfolndication syntaxes as appropriate.

In this example, each download message occurs on the Carousel only once and download data blocks from the same module have been inserted adjacent to one another and in order. In general, however, there are no restrictions on how often a particular message is inserted into the Carousel and the order and relative position of messages. This allows the Data Carousel to be created in a way that best suits a particular use.

An additional protocol on top of the Data Carousel, known as an Object Carousel may be used to provide a virtual file system at the client. When an Object Carousel is used, actual DSM-CC objects (such as files and directories) can be conveyed to the client inside the modules that the Data Carousel extracts from the download data messages. Using the Object Carousel, it is possible to provide clients that have limited, or no, local storage (for example a set top box) with a virtual file system in which it can access DSM-CC objects as if they were local.

A DSM-CC Object Carousel facilitates the transmission of a structured group of objects from a broadcast server to broadcast receivers (clients) using directory objects, file objects and stream objects. The actual directory and content (object implementations) are located at the server. The server repeatedly inserts the mentioned objects in a DVB compliant MPEG-2 transport stream using the Object Carousel protocol.

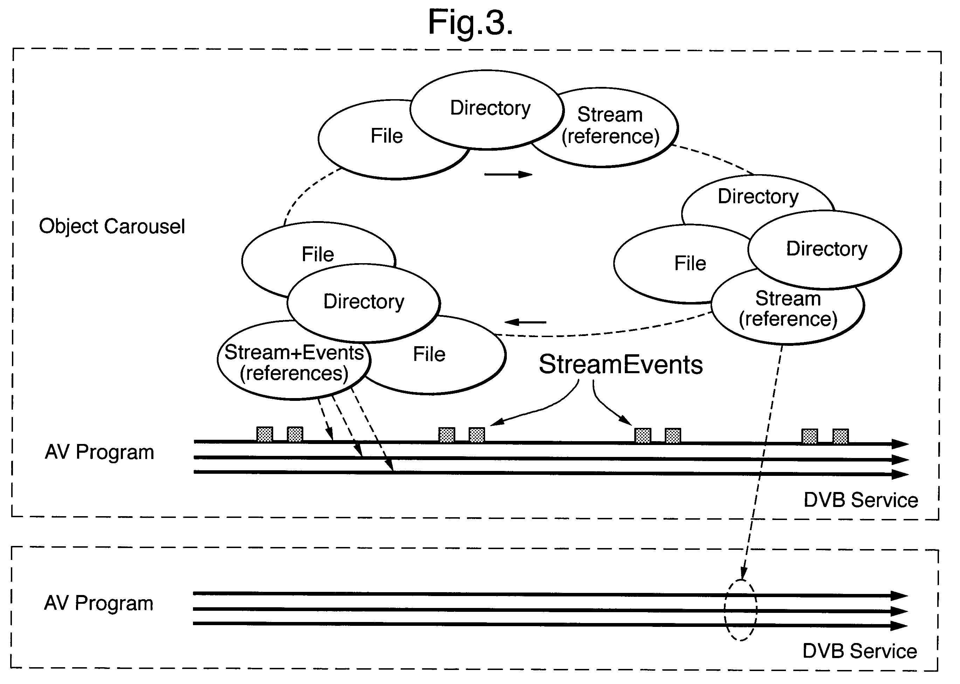

The Object Carousel as part of a DVB service is shown in Figure 3 of the accompanying drawings. The directory and file objects contain the data needed to reconstruct the directory and files at the server, while the transmitted stream objects are references to other streams in the broadcast. The stream objects may also contain information about the DSM-CC events that are broadcast within a particular stream. DSM-CC events can be broadcast with regular stream data and can be used to trigger DSM-CC applications.

Clients can recover the object implementations by reading the repeatedly transmitted Carousel data, and hence mimicking the server's objects in a local object implementation. It can be seen that the Object Carousel provides a way for clients to access applications and the content used by these applications, even though there is not an interactive connection with the server.

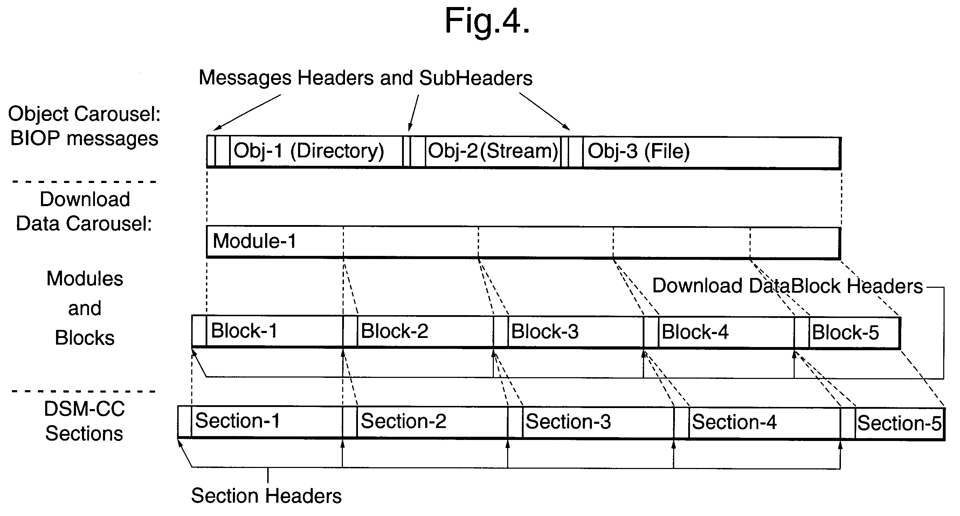

The data and attributes of one object in an Object Carousel are transmitted in one message. The message format is specified by the Broadcast Inter ORB Protocol (BIOP) and is referred to as the BIOP generic object message format (or BIOP message for short). Figure 4 of the accompanying drawings schematically shows the encapsulation and fragmentation of BIOP messages in modules, blocks, and MPEG-2 sections. As will be seen, a BIOP message consists of a MessageHeader, a MessageSubHeader and a MessageBody. The MessageHeader provides information about the version of the BIOP protocol and the length of the BIOP message. The MessageSubHeader contains information about the conveyed object such as ObjectType (file, stream, directory) and ObjectKey (the unique indentifier within a module). The message body depends on the ObjectType and contains the actual object's data. The size of a BIOP message is variable.

The BIOP messages are broadcast in modules of Data Carousels. A module is formed by one or more concatenated BIOP messages and are thus of variable length. Within the module each object is identified by the ObjectKey. An object can easily be found by parsing the ObjectKey field of the BIOP message and the length of the BIOP message.

According to the DSM-CC Data Carousel specification each module is fragmented into one or more blocks which are carried in a DownloadDataBlock message. Each DownloadDataBlock message is of the same size (except for the last block of the module which may be of a smaller size) and is transmitted in turn in an MPEG-2 private section. The encapsulation rules for DownloadDataBlock messages and MPEG-2 private sections are such that blocks can be acquired directly from the transport stream using hardware filters found generally on demultiplexers.

It can thus be seen that the acquisition of an object from the broadcast network requires the complete acquisition of the module in which the object is contained. This requires knowledge of the delivery parameters of the module such as module version, module size, block size, timing and broadcast channel. These delivery parameters are transmitted in a download control message (see Figure 2) which must be acquired from the Carousel before acquiring the module. One download control message can describe the delivery parameters of multiple modules. The retrieval of an object from the Carousel is therefore a two step process.

One problem with the above mentioned system is that downloading some files and directories can take a considerable amount of time. This is because the system must download all the relevant directory objects as well as the file object before a file may be accessed. For example, if a client wants to download the file "dirl/dir2/filel", it must first download the object representing "dir1", then the object representing "dir2" and then finally the object representing "file1", i.e. the system must download the entire path from a root of the virtual file system to the leaf node, which is the actual file. If these object representations are broadcast in different modules and/or in a strange order (for example, if "file1" is broadcast before "dir2"), the download takes a considerable amount of time to complete, since only whole modules can be downloaded and it may be necessary to wait for up to three cycles of the carousel (eg. in the case when the modules containing the objects are ordered such that "file1" is before "dir2" which is before "dir1". The present invention seeks to provide a solution which alleviates this problem so that quicker download times may be achieved.

Accordingly, the present invention provides a method for constructing the modules of an Object Carousel for use in creating a virtual file system at a client comprising:
grouping the directory object representations of all of the file objects in the modules of the Carousel so that they are contained in a subset of the modules.

Further, the present invention also provides an Object Carousel comprising:
a set of modules; wherein
the directory object representations of all of the file objects are grouped in the modules of the Carousel so that they are contained in a subset of the modules.

Further, the present invention also provides a server for broadcasting data to multiple clients comprising:
means for analysing a file and directory structure to be broadcast to said clients as a virtual file system;
means for creating Object Carousel modules, said means being arranged to ensure that directory object representations are grouped so that the directory object representations of all of the file objects in the modules of the Carousel are contained in a subset of the modules.

The invention will be further described by way of non-limitative example with reference to the accompanying drawings, in which:-
Figure 1 shows schematically the messages which comprise a Data Carousel;
Figure 2 shows schematically a Data Carousel having various modules which are split into download data blocks;
Figure 3 shows schematically an Object Carousel for use in a DVB service;
Figure 4 shows schematically the constitution of BIOP messages which make up the data modules which are split into blocks on the Data Carousel;
Figure 5 shows schematically an example of a directory structure and how the modules on the Object Carousel are constructed in an embodiment of the present invention.

The present invention is based on the realisation that the construction of the Object Carousel is critical to the download time experienced by a client. Download time can be reduced by constructing the Object Carousel so that a minimum number of modules need to be downloaded and so that modules are presented on the Carousel in an order more closely representing the order in which they are likely to be downloaded.

Typically, previous attempts at optimising the Object Carousel have proposed grouping the object representations (BIOP messages) that are used together in a single module. For example, a directory object representation would be grouped with all of the file object representations that it contains.

In contrast to this, the present invention proposes not to group file object representations with their parent directory object representation, but instead to group all the directory object representations into a single module. Further, the present invention proposes that this module (hereinafter called the "Directory Module") is broadcast regularly within the Carousel, for example every 10 or 15 seconds. The remaining file object representations may then be grouped into other modules, according to expected application execution patterns. These modules (hereinafter called "File Modules") may then be distributed over the rest of the Carousel, preferably with the popular files (eg. start-up files) broadcast more frequently.

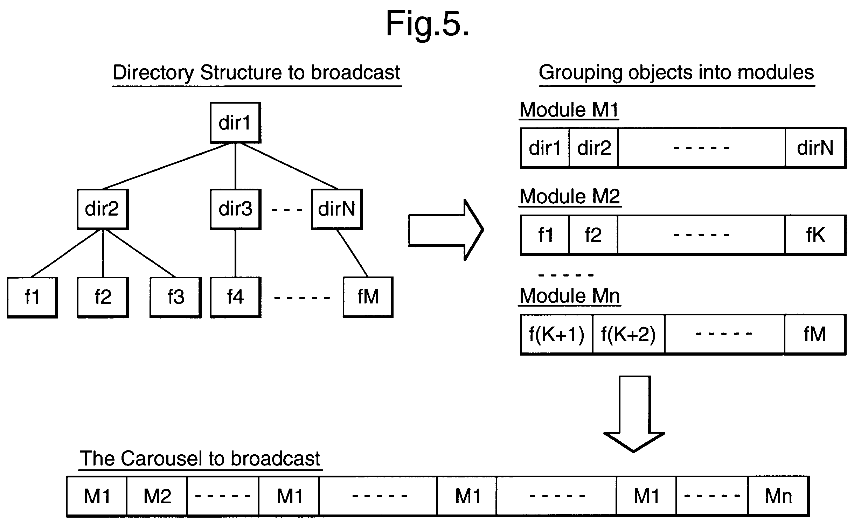

Figure 5 shows a specific embodiment of the invention. As will be seen, the server has a set of directory objects dir1... dirN and a set of file objects f1 fM located within these directories. These directory and file objects need to be broadcast on the Object Carousel so that the client may navigate the directory structure in a virtual file system. The present invention provides that the BIOP messages relating to the directory object representations are grouped into a subset of the modules, in the illustrated case, a single module M1. This Directory Module M1 is then inserted regularly into the Carousel as shown in Figure 5. The directory module thus contains the paths from a root of the virtual file system to each of its leaf nodes, i.e. the actual files. The remaining file object representations are grouped into further modules M2....Mn and these File Modules are inserted into the rest of the Carousel.

Thus, with this system it will only in general be necessary when accessing a file for the first time to download a maximum of two modules, *vis* the Directory Module and the File Module of interest. Since the Directory Module is regularly broadcast, the download time is further reduced.

A further benefit gained from this approach is that once an object has been downloaded, the directory information needed for finding other objects will also have been resolved. Thus, as soon as one object has been successfully resolved, all other object downloads will only require at most one module to be downloaded. This results in a substantial performance gain compared to the case when directory information is distributed over several modules.

When very large directory structures are in use, it may be necessary to place the directory object representations into two or more modules. In this case there will be two or more Directory Modules instead of one. These two or more Directory Modules should be repeatedly broadcast in the Carousel, possibly consecutively to achieve good performance. Preferably, the modules containing the directory object representations do not contain any file object representations.

The method of the present invention may be carried out on a server appropriately programmed to construct the object Carousel according to the method of the invention. The server will thus have means for analysing the file and directory structure to be broadcast to clients. The results of this analysis are then used to create the Carousel so that all the directory object representations (i.e. the directory object representations of all the file objects) are grouped in a subset of the modules. Preferably, all of the directory object representations are grouped in a single Carousel module. If two or more modules are required they should preferably be arranged consecutively on the Carousel. It is further preferable that the module(s) containing all the directory object representations contain no file object representations.

The present invention is suitable for use in a DVB system but is not limited thereto. The invention is applicable to any system providing for unidirectional download from an Object Carousel.

## Claims

1. A method for constructing the modules of an Object Carousel for use in creating a virtual file system at a client comprising:
grouping the directory object representations of all of the file objects in the modules of the Carousel so that they are contained in a subset of the modules.

2. A method according to claim 1 wherein said subset consists of a number of consecutive modules of the Carousel.

3. A method according to claim 1 or 2 wherein the modules of the subset contain no file object representations.

4. A method according to claim 1 wherein all the directory object representations are located in a single module.

5. A method according to claim 1, 2, 3 or 4 in which the file object representations include representations of executable applications and are grouped into file modules according to expected application execution pattern.

6. A method according to any one of the preceding claims wherein the modules of said subset are inserted at a plurality of points substantially regularly distributed over the Carousel.

7. A method according to any one of the preceding claims wherein said subset of directory module(s) is/are repeated on the Carousel at least every 15 seconds.

8. A method according to any one of the preceding claims wherein said subset of directory module(s) is/are repeated on the Carousel at least every 10 seconds.

9. A method according to any one of claims 6 to 8 further comprising inserting file modules constructed according to claim 5 in other portions on said Carousel.

10. A method according to claim 9 in which the file modules containing more frequently accessed files are distributed on the Carousel more frequently than file modules containing less frequently accessed files.

11. The method of any one of claims 1 to 10 wherein said modules are divided into blocks, said blocks being transmitted in respective MPEG-2 private sections.

12. An Object Carousel comprising:
a set of modules; wherein
the directory object representations of all of the file objects are grouped in the modules of the Carousel so that they are contained in a subset of the modules.

13. A server for broadcasting data to multiple clients comprising:
means for analysing a file and directory structure to be broadcast to said clients as a virtual file system;
means for creating Object Carousel modules, said means being arranged to ensure that directory object representations are grouped so that the directory object representations of all of the file objects in the modules of the Carousel are contained in a subset of the modules.

14. A server according to claim 13 wherein said ensuring means is arranged to ensure that all said directory object representations are grouped into a single Object Carousel module.

15. A server according to claim 13 or 14 wherein said ensuring means is arranged to ensure that said subset consists of a number of consecutive modules of the Carousel.

16. A server according to any one of claims 13, 14 or 15 wherein said ensuring means is arranged to ensure that the modules of the subset contain no file object representations.
